# EUROPÄISCHE PATENTANMELDUNG

(11) **EP 3 944 465 A1**
(43) Veröffentlichungstag der Anmeldung: **26.01.2022**
(21) Anmeldenummer: 20186687.8
(22) Anmeldetag: 20.07.2020
(51) Int. Cl.: H02K 1/16, H02K 1/20, H02K 5/15, H02K 5/18

(54) **STATOR FÜR EINE GEHÄUSELOSE DYNAMOELEKTRISCHE ROTATORISCHE MASCHINE**

(71) Anmelder: Siemens Aktiengesellschaft, 80333 München (DE)
(72) Erfinder: Büttner, Klaus, 97618 Hollstadt (DE); Grillenberger, Reiner, 91575 Windsbach (DE); Kirchner, Klaus, 97645 Ostheim (DE); Warmuth, Matthias, 97618 Windshausen (DE)

(57) **Zusammenfassung**

Die Erfindung betrifft einen Stator (2) für eine gehäuselose dynamoelektrische rotatorische Maschine (1), wobei der Stator (2) ein Materiallagengefüge (8) aufweist, wobei das Materiallagengefüge (8) eine Mehrzahl an Materiallagen (6) aufweist, wobei die Materiallagen (6) entlang einer Rotationsachse aneinandergereiht sind, wobei das Materiallagengefüge (8) eine Mehrzahl an Aufdickungen (9, 10) und eine Mehrzahl an Nuten (5, 7) aufweist, wobei eine Nut (5, 7) zwischen zwei Aufdickungen (9, 10) angeordnet ist. Die Erfindung betrifft überdies eine gehäuselose dynamoelektrische rotatorische Maschine (1), aufweisend einen derartigen Stator (2), wobei an wenigstens einem axialen Ende (50, 51) des Stators (2) ein Endelement (14) angeordnet ist, wobei das Endelement (14) mittels wenigstens eines Verbindungselements (16) mit dem Stator (2) verbunden ist.

## Beschreibung

Die Erfindung betrifft einen Stator für eine gehäuselose dynamoelektrische rotatorische Maschine sowie eine gehäuselose dynamoelektrische rotatorische Maschine.

Ein zentraler Aspekt neuer Umweltrichtlinien betrifft eine Reparierbarkeit von Produkten. Auch Elektromotoren sind hiervon betroffen.

Zu den Aufgaben eines Gehäuses eines Elektromotors gehört z. B. eine Kühlung des Elektromotors. Jedoch ist ein beschädigtes Gehäuse oftmals ein Grund, den Elektromotor zu entsorgen, da sich eine Reparatur mitunter schwierig gestaltet.

Der Erfindung liegt die Aufgabe zugrunde, einen Elektromotor hinsichtlich Reparierbarkeit zu verbessern.

Die Lösung der Aufgabe gelingt durch Anspruch 1, d. h. einen Stator für eine gehäuselose dynamoelektrische rotatorische Maschine, wobei der Stator ein Materiallagengefüge aufweist, wobei das Materiallagengefüge eine Mehrzahl an Materiallagen aufweist, wobei die Materiallagen entlang einer Rotationsachse aneinandergereiht sind, wobei das Materiallagengefüge eine Mehrzahl an Aufdickungen und eine Mehrzahl an Nuten aufweist, wobei eine Nut zwischen zwei Aufdickungen angeordnet ist.

Das Materiallagengefüge hat vorteilhaft die Funktion eines Blechpakets inne und ist vorteilhaft als Blechpaket (auch: Statorpaket) ausgeführt. Die Materiallage hat vorteilhaft die Funktion eines, vorzugsweise gestanzten, Einzelblechs inne und ist vorteilhaft als Einzelblech ausgeführt.

In einer vorteilhaften Ausführung sind die Aufdickungen wenigstens teilweise als Kühlrippen ausgebildet.

Durch diese Oberflächenvergrößerung wird Wärme auf einfache Weise abgeführt.

In einer vorteilhaften Ausführung ist wenigstens eine Nut derart ausgebildet, dass wenigstens ein Nutkeil aufnehmbar ist, wobei wenigstens eine Aufdickung derart ausgebildet ist, dass der Nutkeil fixierbar ist.

In einer vorteilhaften Ausführung weist zur Fixierung des Nutkeils eine erste Aufdickung an einem radialen Ende der ersten Aufdickung einen in Rotationsrichtung gerichteten Vorsprung auf, wobei eine zweite Aufdickung an einem radialen Ende der zweiten Aufdickung einen entgegen der Rotationsrichtung gerichteten Vorsprung aufweist.

In einer vorteilhaften Ausführung sind die Materiallagen stoffschlüssig, insbesondere mittels eines Klebstoffes, verbunden.

Vorteilhaft werden die Einzelbleche während eines Stanzprozesses oder nach dem Stanzen miteinander zu einem Stator-Eisenpaket verknüpft. Dies gelingt besonders gut durch vollflächiges Verkleben der Einzelbleche.

Vollflächiges Verkleben bietet zudem den Vorteil, dass die Einzelbleche zueinander abgedichtet sind. Auf diese Weise wird ein guter Schutz gegen Berührung, Fremdköper und Wasser erreicht.

In einer vorteilhaften Ausführung ist der Stator mit einer Beschichtung beschichtet.

Die Beschichtung gewährleistet vorteilhaft einen Korrosionsschutz, insbesondere an einem Außenumfang des Stators.

Ferner ist die Beschichtung geeignet, in einem innenliegenden Bereich der Nuten eine Isolationsschicht zwischen Wicklung und Materiallage, insbesondere Statorblech, zu bilden.

Am Außenumfang ist z. B. eine Metall aufweisende Beschichtung möglich. Es sind denkbar: Eine galvanische Beschichtung, eine Beschichtung durch thermisches Flammspritzen oder Kaltgasspritzen sowie eine Beschichtung durch ein Tauchverfahren (z.B. Verzinken).

Vorzugsweise wird nur eine Beschichtungsart angewandt, die für außenliegende Bereich des Stators sowie für innenliegende Bereiche geeignet ist. Besonders gut eignet sich hierfür eine Beschichtung auf Harzbasis, die beispielsweise durch Lackieren oder Tauchen aufgebracht wird. Eine elektrostatisches Pulverbeschichtung (z. B. mit einer anschließenden thermischen Behandlung) stellt eine weitere Möglichkeit dar.

Die Beschichtung weist vorteilhaft eine Dicke zwischen 20 µm und 70 µm auf, insbesondere zwischen 30 µm und 60 µm.

Ferner ist eine Beschichtung denkbar, die Lack und/oder Harz aufweist. Diese können auf Polyester- (ungesättigt) und/oder Epoxidbasis sein. Es sind auch Silikone denkbar.

Durch die Beschichtung ist der Stator z. B. gegen Korrosion und somit Rostbildung geschützt. Dies gelingt z. B. durch Tauchen in ein Rostschutzsubstrat und/oder durch Lackieren mit dem Rostschutzsubstrat.

Überdies kann eine elektrische Isolation durch die Beschichtung erzeugt werden. Dies erfolgt z.B. durch Füllstoffe in der Beschichtung.

Vorteilhaft werden hierbei zur Verbesserung gegen Abrieb, vorzugsweise im Außenbereich, keramische Füllstoffe verwendet. Keramische Füllstoffe können auch zur Steigerung einer Isolationsfähigkeit und Wärmeleitung, insbesondere in einem Nutbereich für die Wicklung, verwendet werden.

Als Füllstoffe eignen sich zudem wärmeleitfähige Partikel, z.B. Quarzsand, oder teilentladungsbeständige Partikel, insbesondere auf Siliziumbasis.

Die Lösung der oben gestellten Aufgabe gelingt ferner durch Anspruch 7, d. h. eine gehäuselose dynamoelektrische rotatorische Maschine, aufweisend einen derartigen Stator, wobei an wenigstens einem axialen Ende des Stators ein Endelement angeordnet ist, wobei das Endelement mittels wenigstens eines Verbindungselements mit dem Stator verbunden ist.

Die gehäuselose dynamoelektrische rotatorische Maschine kann auch als einstückige Stator-Gehäuse-Einheit bezeichnet werden, da eine Funktion des Gehäuses insbesondere an einem Außenumfang des Stators realisiert ist.

Erfindungsgemäß wird auf ein konventionelles Gehäuse verzichtet. Das Gehäuse ist in den Stator integriert ausgeführt, indem spezielle Konturen sowie Rippen in das Einzelblech während des Stanzprozesses gestanzt werden.

In einer vorteilhaften Ausführung ist an einem vorderen axialen Ende des Stators und an einem hinteren axialen Ende des Stators je ein Endelement angeordnet.

In einer vorteilhaften Ausführung ist das Endelement als Lagerschild ausgeführt.

Das Lagerschild weist vorteilhaft eine Aufnahme für ein Lager zur Lagerung einer Welle des Rotors auf. Vorteilhaft weist die gehäuselose dynamoelektrische rotatorische Maschine ein Lagerschild an einer A-Seite und ein Lagerschild an einer B-Seite auf.

Vorteilhaft weist das Endelement Aufdickungen, insbesondere als Kühlrippen ausgeführt, auf. Wickelköpfe, die vorzugsweise axial unter dem Endelement positioniert sind, können ihre Verlustwärme somit besser abgeben. Auf diese Weise kann ein Wirkungsgrad gesteigert werden.

Die Kühlrippen des Stators und die Kühlrippen des Endelements sind vorteilhaft in einer Flucht angeordnet.

In einer vorteilhaften Ausführung ist das Verbindungselement ein Schraubelement. Das Schraubelement ist vorzugsweise eine Spannschraube.

In einer vorteilhaften Ausführung ist wenigstens ein Nutkeil in wenigstens einer Nut des Stators angeordnet.

Vorteilhaft ist genau ein Nutkeil in einer Nut angeordnet. Es können jedoch auch mehrere Nutkeile pro Nut vorhanden sein.

In einer vorteilhaften Ausführung ist das Verbindungselement mit wenigstens einem Nutkeil verbunden.

So gelingt eine optimale Verspannung zwischen Lagerschild und Stator.

Auf diese Weise wird der Stator mit dem Endelement verbunden. Vorteilhaft ist das Endelement an wenigstens zwei Stellen mit dem Stator verbunden. Dies gelingt vorteilhaft mittels zweier Nutkeile, welche bezüglich eines Außenumfangs des Stators beabstandet angeordnet sind.

Aus Zentriergründen sind vier Stellen jedoch bevorzugt.

In einer vorteilhaften Ausführung ist wenigstens ein Standfuß mit wenigstens einem Nutkeil verbunden.

Auf diese Weise wird der Stator mit dem Standfuß verbunden. Vorteilhaft sind wenigsten zwei Standfüße mit dem Stator verbunden. Dies gelingt vorteilhaft mittels zweier Nutkeile, welche bezüglich eines Außenumfangs des Stators beabstandet angeordnet sind. Diese befinden sich vorteilhaft an einer Unterseite des Stators.

Die Standfüße können z. B. bei an einer Wand zu montierenden Statoren jedoch auch seitlich angeordnet sein.

Eine Aufnahme von Bauteilen wie Lagerschilde und Standfüßen wird somit durch eingebrachte Nutkeile realisiert.

Da eine Position der Nut für den Nutkeil durch den Stanzprozess sehr genau ist, ist eine Bearbeitung der Standfüße an der Unterseite nicht erforderlich.

In einer vorteilhaften Ausführung weist das Endelement einen Anschlusskasten zur Versorgung mit elektrischer Energie auf.

Der Anschlusskasten weist vorteilhaft einen Sockel auf und ist zur Verbindung mit einem Klemmkasten ausgebildet.

In einer vorteilhaften Ausführung ist der Nutkeil zum vorderen axialen Ende des Stators und/oder zum hinteren axialen Ende des Stators beabstandet angeordnet.

Eine auf diese Weise freie Nutgrundfläche ermöglicht eine Zentrierung der Endelemente, insbesondere Lagerschilde. Es ist keine weitere Bearbeitung erforderlich

Die Nut ist hierzu vorzugsweise als Keilnut ausgeführt.

Die Erfindung bietet den Vorteil, dass ein Recycling vereinfacht wird, da kein Gehäuse vorhanden ist. Eine Wicklung kann z. B. bei Beschädigung aus dem Statorpaket entfernt und eine neue Wicklung eingebracht werden. Eine Wiederverwendung des Statorpakets mit dem integrierten Gehäuse ist somit leicht möglich.

Die Erfindung bietet zudem den Vorteil, dass eine Bearbeitung von Zentrierungen nicht erforderlich ist. Hierzu werden Nutgrundflächen im Stator genutzt. Eine Genauigkeit einer Koaxialität ist durch das Stanzen der Einzelbleche sehr hoch.

Durch den Entfall des Gehäuses kann eine Ringfläche der Wandung zusätzlich am Aktivteil genutzt werden.

Dies ist vorteilhaft, da die Maschine mit verschiedenen, leistungsbezogenen Paketlängen innerhalb einer Achshöhe, möglichst kurz ausgeführt sein kann. Eine Maschinenlänge ist so nicht abhängig von einem Gehäuse.

Das Lagerschild wird nicht an einer Gehäusefläche befestigt, sondern direkt am Materiallagengefüge, insbesondere am Blechpaket.

Es ist durch die Erfindung möglich, einen Außendurchmesser des Stators zu vergrößern. Durch einen größeren Stator-Außendurchmesser besteht die Möglichkeit, einen Rotor-Außendurchmesser ebenso größer zu gestalten und somit eine höhere Leistung bzw. einen höheren Wirkungsgrad zu erzielen. Eine optimale Wärmeabfuhr ist zudem gegeben. Da eine Abmessung einer Achshöhe jedoch nicht vergrößert werden muss, erlaubt die Erfindung den Bau eines kompakten und effizienten Motors.

Die Erfindung eignet sich für sämtliche Anwendungsgebiete von dynamoelektrischen rotatorischen Maschinen, insbesondere für Industrieanwendungen wie Pumpen-, Lüfter-, Kompressor-Antriebe sowie für Förderanlagen.

Im Folgenden wird die Erfindung anhand der in den Figuren gezeigten Beispielen näher beschrieben und erläutert. Es zeigen:
- FIG 1: eine gehäuselose dynamoelektrische rotatorische Maschine,
- FIG 2: eine Kontur eines Einzelblechs,
- FIG 3: ein Blechpaket,
- FIG 4: das Blechpaket mit vier Nutkeilaufnahmeelementen,
- FIG 5: eine Befestigung eines Endelementes, ausgeführt als Lagerschild am Stator,
- FIG 6: die dynamoelektrische rotatorische Maschine mit Standfüßen,
- FIG 7: das Lagerschild,
- FIG 8: einen Ausschnitt des Lagerschilds,
- FIG 9: einen weiteren Ausschnitt des Lagerschilds,
- FIG 10: die dynamoelektrische rotatorische Maschine mit einer Haube,
- FIG 11: eine Schnappverbindung.

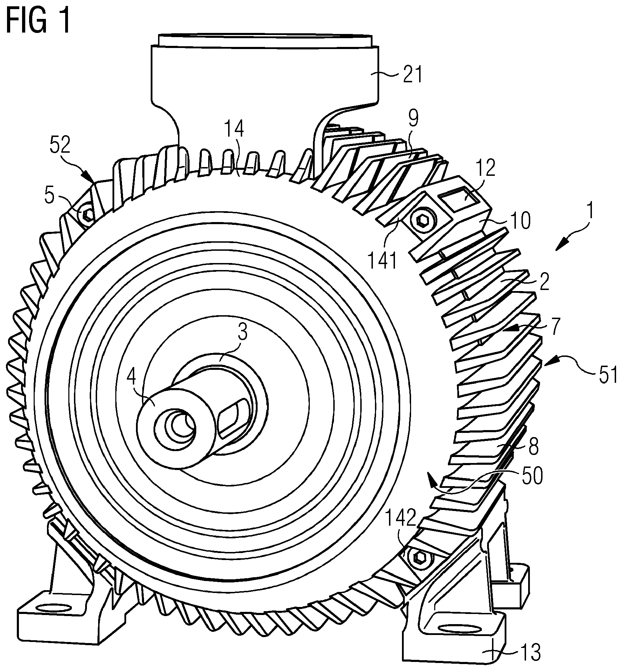

FIG 1 zeigt eine gehäuselose dynamoelektrische rotatorische Maschine 1. Die Maschine 1 umfasst einen Stator 2, einen Rotor 3 sowie eine Welle 4. Der Stator 2 umfasst ein Materiallagengefüge, insbesondere ein Blechpaket 8 (auch: Statorpaket). An einem Außenumfang 52 des Stators 2, insbesondere an einem Außenumfang des Blechpakets 8, sind Aufdickungen in Form von Kühlrippen 9 ausgebildet. Zwischen zwei Kühlrippen befindet sich eine Nut 7. Zudem sind am Außenumfang weitere Aufdickungen in Form eines Nutkeilaufnahmeelements 10 ausgebildet. Dazwischen liegend ist eine Nut 5 ausgeführt.

Die Figur zeigt zudem eine Mehrzahl an Nutkeilen 12 sowie eine Mehrzahl an Standfüßen 13. An einem vorderen axialen Ende des Stators 50 ist ein Lagerschild 14 angeordnet, vorzugsweise ist zudem an einem hinteren axialen Ende 51 ein weiteres Lagerschild ausgebildet (nicht dargestellt).

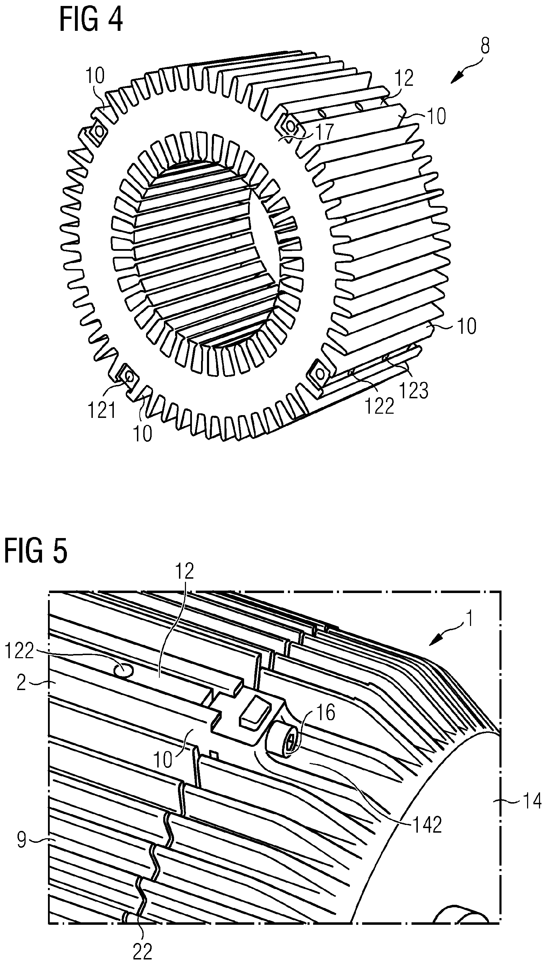

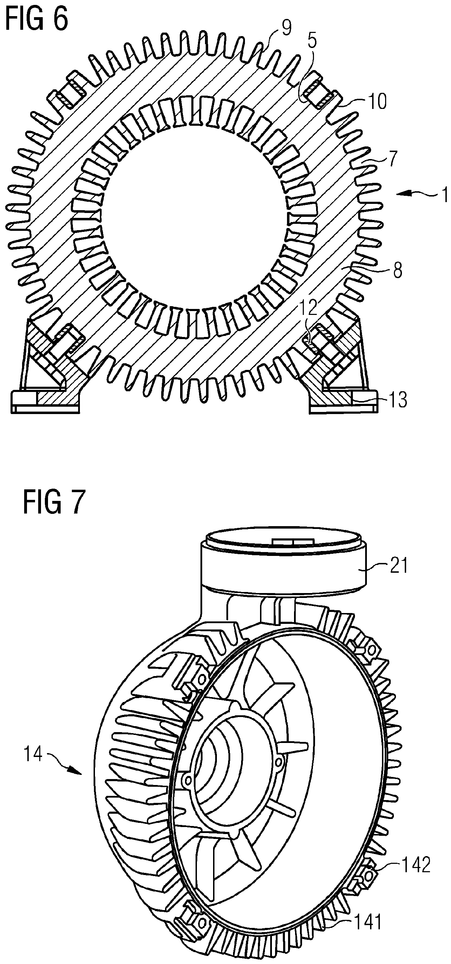

Die Figur zeigt ferner, dass auch das Lagerschild 14 Kühlrippen 141 aufweist. Das Lagerschild 14 umfasst ferner einen Anschlusskasten 21. Das Lagerschild 14 weist zudem ein Nutkeilaufnahmeelement 142 auf. Mögliche Befestigungsarten des Lagerschilds 14 bzw. der Standfüße 13 wird in den Figuren 5 bzw. 6 näher erläutert.

Durch Vergrößerung der Außendurchmesser am Stator und Rotor ist es möglich, die Maschine kompakter auf die Achshöhe bezogene Leistung zu gestalten. Die Hüllmaße sind dabei nicht größer als bei einer Maschine mit Gehäuse.

Ein Recycling sowie eine Aufbereitung von Motorbauteilen werden durch die Erfindung vereinfacht.

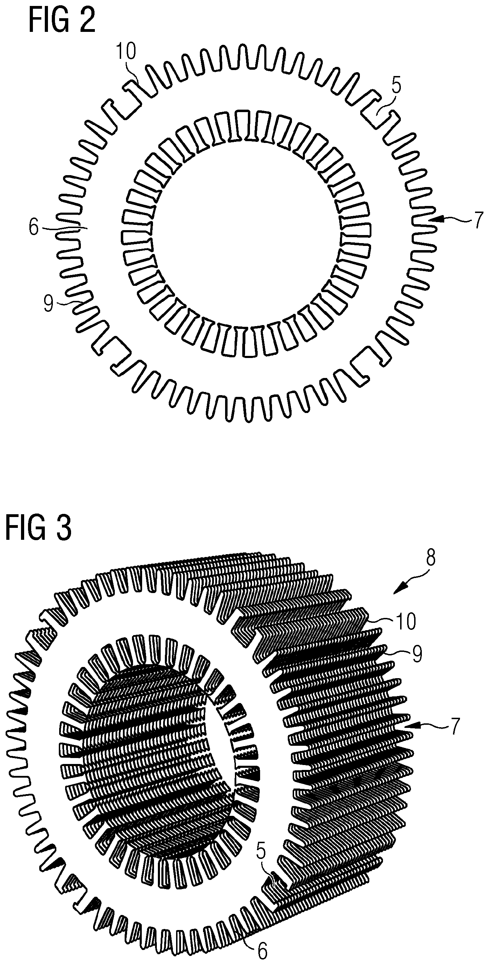

FIG 2 zeigt eine Kontur eines Einzelblechs 6. Das Einzelblech 6 weist eine bestimmte Kontur auf. Die Kontur weist an ihrem Außenumfang Einbuchtungen und Ausbuchtungen auf, welche der Bildung von Kühlrippen 9 und Nuten 7 dienen, sowie weitere Einbuchtungen und weitere Ausbuchtungen, welche der Bildung der Nutkeilaufnahmeelemente 10 und Nuten 5 dienen.

Das Einzelblech 6 ist vorzugsweise mittels Stanzen aus, vorzugsweise gewalztem, Großblech hergestellt.

FIG 3 zeigt eine Mehrzahl an Einzelblechen 6, welche zur Bildung eines Blechpakets 8 aneinandergereiht sind. Die Einzelbleche sind vorzugsweise vollflächig miteinander verklebt.

Die Kühlrippen 9 werden vorteilhaft durch Stanzen hergestellt. Eine Kühlung ist somit im Stator 2 integriert. Der Wärmeübergang von Stator 2 zu den Kühlrippen 9 ist somit optimal.

FIG 4 zeigt das Blechpaket 8, aufweisend vier Nutkeilaufnahmeelemente 10. In jedem Nutkeilaufnahmeelement 10 ist in der Figur ein Nutkeil 12 angeordnet. Vorteilhaft ist pro Nutkeilaufnahmeelement 10 nur ein Nutkeil 12 angeordnet. Es ist jedoch auch möglich, in einem Nutkeilaufnahmeelement 10 mehrere Nutkeile 12 anzuordnen. Der Nutkeil 12 weist, wie in der Figur gezeigt, wenigstens eine Bohrung 121, 122, 123 oder anderweitige Vertiefungen auf. Dies dient beispielsweise einer Befestigung anderer Bauteile. Vorteilhaft ist eine Bohrung 121 an einem axialen Ende, vorzugsweise an beiden axialen Enden, ausgebildet. Die Figur zeigt ferner zwei Bohrungen 122, 123 am radialen Ende des Nutkeils 12.

Der Nutkeil 12 ist zum vorderen axialen Ende des Stators 50 (s. FIG 1) und/oder zum hinteren axialen Ende des Stators 51 beabstandet angeordnet. Eine auf diese Weise freie Nutgrundfläche 17 ermöglicht eine Zentrierung der Endelemente, insbesondere Lagerschilde 14. Es ist keine weitere Bearbeitung zur Zentrierung erforderlich.

FIG 5 zeigt eine Befestigung eines Endelementes, ausgeführt als Lagerschild 14, am Stator 2. Im Nutkeilaufnahmeelement 10 ist ein Nutkeil 12 angeordnet. Im Nutkeilelement 142 des Lagerschilds 14 ist eine Befestigung 16 angeordnet. Dies dient einer Befestigung des Lagerschilds 14 am Stator 2. Beispielsweise handelt es sich hierbei um eine Spannschraube. Eine Befestigung der Lagerschilde 14 durch Nutkeile 12 ist vorteilhaft, da die Maschine 1 somit besonders kompakt gebaut werden kann.

Die Nutkeile 12 sind vorteilhaft kürzer als das Statorpaket 8 ausgeführt. Dies ermöglicht beim Befestigen der Lagerschilde 14, insbesondere mittels einer axialen Verschraubung in die Nutkeile 12, eine axiale Verspannung der Lagerschilde 14 an den Stirnseiten des Statorpakets 8.

Eine Abdichtung von Stator und Lagerschild gelingt besonders gut durch einen O-Ring, der in einen Spalt 22 eingebracht wird. Auf diese Weise ist die Maschine besonders gut gegen Fremdkörper und Berührung sowie Wasser geschützt. Die Maschine 1 weist somit eine Eignung für die Schutzklassen IP54 und IP55 auf.

Auch eine geschäumte Dichtung kann in den Spalt 22 eingebracht werden.

FIG 6 zeigt die Maschine 1, aufweisend Standfüße 13. Auch die Befestigung der Standfüße 13 gelingt durch die Nutkeile 12. Vorteilhaft sind radiale Gewinde im Nutkeil 12 zur Befestigung des Standfußes 13 bzw. zur Aufnahme einer Hebeöse ausgeführt. Durch eine Fußabstützung an Kühlrippen 9 und eine Verspannung mit dem Nutkeil 12 steht die Maschine 1 sicher.

Eine Fußbefestigung erfolgt vorteilhaft an den Nutkeilen 12. Geführt werden die Standfüße 13 vorteilhaft in der Nut 5. Somit ist eine Ausführung mit und ohne Fuß einfach realisierbar, bzw. auch nachrüstbar, Eine Bearbeitung ist aufgrund der vorhandenen Genauigkeit aus dem Stanzprozess nicht erforderlich.

FIG 7 zeigt das Lagerschild 14. Das Lagerschild 14 weist eine Mehrzahl an Kühlrippen 141 auf sowie vier Nutkeilaufnahmeelemente 142. Das Lagerschild 14 umfasst, vorzugsweise an einer Oberseite des Lagerschilds 14, einen Anschlusskastensockel 21. Eine Abdichtung einer Verbindungsstelle des zwischen Lagerschild 14 und Blechpaket 8 gelingt, beispielsweise mittels eines O-Rings, der beispielsweise auf einer Stirnseite des Blechpakets 8 angeordnet ist.

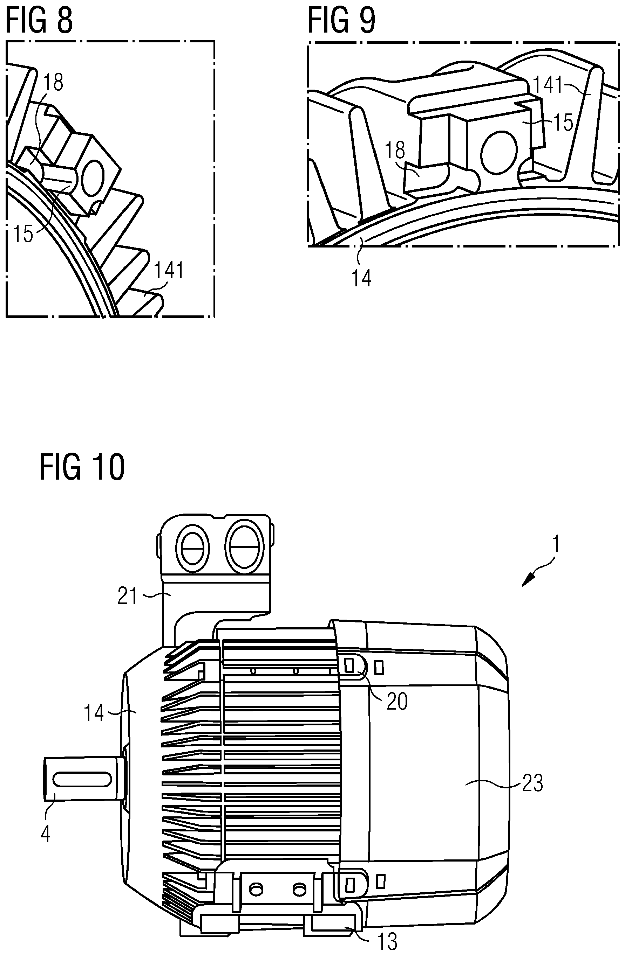

FIG 8 und FIG 9 zeigen einen Ausschnitt des Lagerschilds 14 sowie eine Befestigungsnocke 15 aus verschiedenen Perspektiven. Die Befestigungsnocke 15 ist, insbesondere durch eine Einkerbung 18, derart ausgeführt, dass ein Wasserablauf an der Befestigungsnocke 15 im Lagerschild 14 optimal ist. Die Befestigungsnocke 15 ragt über ein axiales Ende des Lagerschilds 14 hinaus. Beim Zusammenfügen von Lagerschild 14 und Stator 2 ragt vorteilhaft die Befestigungsnocke 15 in die Nut 5 hinein bzw. greift in die Nut 5 ein. Dies ermöglicht eine Zentrierung.

FIG 10 zeigt die Maschine 1, aufweisend eine Haube 23. Die Maschine 1 ist vorzugsweise eigenbelüftet ausgeführt und weist vorteilhaft einen Lüfter auf (nicht dargestellt). Die Haube 23 dient einer Abschirmung des Lüfters.

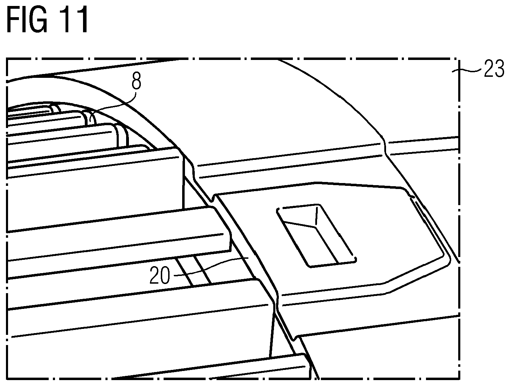

FIG 11 zeigt eine Schnappverbindung 20. Die Schnappverbindung 20 ermöglicht eine Befestigung der Haube 23. Auch andere Verbindungsarten sind denkbar.

## Patentansprüche

1. Stator (2) für eine gehäuselose dynamoelektrische rotatorische Maschine (1), wobei der Stator (2) ein Materiallagengefüge (8) aufweist, wobei das Materiallagengefüge (8) eine Mehrzahl an Materiallagen (6) aufweist, wobei die Materiallagen (6) entlang einer Rotationsachse aneinandergereiht sind, wobei das Materiallagengefüge (8) eine Mehrzahl an Aufdickungen (9, 10) und eine Mehrzahl an Nuten (5, 7) aufweist, wobei eine Nut (5, 7) zwischen zwei Aufdickungen (9, 10) angeordnet ist.

2. Stator (2) nach Anspruch 1, wobei die Aufdickungen (9, 10) wenigstens teilweise als Kühlrippen ausgebildet sind.

3. Stator (2) nach einem der vorhergehenden Ansprüche, wobei wenigstens eine Nut (5, 7) derart ausgebildet ist, dass wenigstens ein Nutkeil (12) aufnehmbar ist, wobei wenigstens eine Aufdickung (9, 10) derart ausgebildet ist, dass der Nutkeil (12) fixierbar ist.

4. Stator (2) nach Anspruch 3, wobei zur Fixierung des Nutkeils (12) eine erste Aufdickung an einem radialen Ende der ersten Aufdickung einen in Rotationsrichtung gerichteten Vorsprung aufweist, wobei eine zweite Aufdickung an einem radialen Ende der zweiten Aufdickung einen entgegen der Rotationsrichtung gerichteten Vorsprung aufweist.

5. Stator (2) nach einem der vorhergehenden Ansprüche, wobei die Materiallagen (6) stoffschlüssig, insbesondere mittels eines Klebstoffes, verbunden sind.

6. Stator (2) nach einem der vorhergehenden Ansprüche, wobei der Stator (2) mit einer Beschichtung beschichtet ist.

7. Gehäuselose dynamoelektrische rotatorische Maschine (1), aufweisend einen Stator (2) nach einem der Ansprüche 1 bis 6, wobei an wenigstens einem axialen Ende (50, 51) des Stators (2) ein Endelement (14) angeordnet ist, wobei das Endelement (14) mittels wenigstens eines Verbindungselements (16) mit dem Stator (2) verbunden ist.

8. Gehäuselose dynamoelektrische rotatorische Maschine (1) nach Anspruch 7, wobei an einem vorderen axialen Ende (50) des Stators (2) und an einem hinteren axialen Ende (51) des Stators (2) je ein Endelement (14) angeordnet ist.

9. Gehäuselose dynamoelektrische rotatorische Maschine (1) nach einem der Ansprüche 7 oder 8, wobei das Endelement (14) als Lagerschild ausgeführt ist.

10. Gehäuselose dynamoelektrische rotatorische Maschine (1) nach einem der Ansprüche 7 bis 9, wobei das Verbindungselement (16) ein Schraubelement ist.

11. Gehäuselose dynamoelektrische rotatorische Maschine (1) nach einem der Ansprüche 7 bis 10, wobei wenigstens ein Nutkeil (12) in wenigstens einer Nut des Stators angeordnet ist.

12. Gehäuselose dynamoelektrische rotatorische Maschine (1) nach einem der Ansprüche 7 bis 11, wobei das Verbindungselement (16) mit wenigstens einem Nutkeil (12) verbunden ist.

13. Gehäuselose dynamoelektrische rotatorische Maschine (1) nach einem der Ansprüche 7 bis 12, wobei wenigstens ein Standfuß (13) mit wenigstens einem Nutkeil (12) verbunden ist

14. Gehäuselose dynamoelektrische rotatorische Maschine (1) nach einem der Ansprüche 7 bis 13, wobei das Endelement (14) einen Anschlusskasten (21) zur Versorgung mit elektrischer Energie aufweist.

15. Gehäuselose dynamoelektrische rotatorische Maschine (1) nach einem der Ansprüche 7 bis 14, wobei der Nutkeil (12) zum vorderen axialen Ende (50) des Stators (2) und/oder zum hinteren axialen Ende (51) des Stators (2) beabstandet angeordnet ist.
